# EUROPÄISCHE PATENTSCHRIFT

(11) **EP 3 853 983 B1**
(45) Veröffentlichungstag und Bekanntmachung des Hinweises auf die Patenterteilung: **17.12.2025**
(21) Anmeldenummer: 19773054.2
(22) Anmeldetag: 19.09.2019
(51) Int. Cl.: H02K 15/04, H02K 3/18

(54) **HERSTELLUNG EINER WENDEL, DAUERFORM FÜR EINE WENDEL SOWIE WENDEL**
PRODUCTION OF A COIL, PERMANENT MOLD FOR A COIL, AND COIL
FABRICATION D'UNE SPIRALE, MOULE PERMANENT POUR UNE SPIRALE ET SPIRALE ASSOCIÉE

(30) Priorität: 19.09.2018 DE 102018215986
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: WÖSTMANN, Franz-Josef, 28359 Bremen (DE); HEUSER, Michael, 28359 Bremen (DE); BUSSE, Matthias, 28359 Bremen (DE)
(74) Vertreter: Pfenning, Meinig & Partner mbB
(86) Internationale Anmeldenummer: PCT/EP2019/075160
(87) Internationale Veröffentlichungsnummer: WO 2020/058397

(56) Entgegenhaltungen:
- EP-A1- 1 612 918
- EP-A1- 3 208 013
- EP-A2- 2 387 135
- DE-A1- 102017 211 034
- JP-A- 2004 336 969
- JP-A- 2015 002 614
- JP-A- 2015 009 259
- JP-A- S6 228 045
- NL-A- 6 910 329

## Beschreibung

Die vorliegende Erfindung betrifft ein Verfahren zur Herstellung einer Wendel. Weiterhin betrifft sie eine Dauerform, die zur Herstellung einer Wendel dient, sowie eine Wendel, die mittels des Verfahrens oder mittels der Dauerform hergestellt wurde.

Wendeln, die beispielsweise als elektrische Spulen verwendet werden, werden gemäß dem Stand der Technik häufig gewickelt. Dabei wird das Wickeln mitunter manuell durchgeführt, um den Füllgrad gegenüber Serienverfahren zu verbessern. Eine deutliche Verbesserung der Leistungsfähigkeit konnte in letzter Zeit durch gegossene Spulen erreicht werden.

Das Dokument DE 10 2012 212 637 A1 beschreibt die gießtechnische Herstellung von Spulen. Durch diese Art der Herstellung können die bei wickelbaren Runddrähten ungünstigen Füllfaktoren durch Verwendung anderer Drahtgeometrien (die sich üblicherweise nicht wickeln lassen würden) deutlich übertroffen und so die Leistungsfähigkeit gesteigert werden.

Die Druckschrift JP 2015 009259 A zeigt eine Spulengießvorrichtung zum Gießen einer Spule, die sich mehrfach um eine Mittelachse dreht. Sie umfasst: eine äußere Spulenform, die ein Durchgangsloch aufweist, das so ausgebildet ist, dass seine Größe einer inneren Umfangsfläche einer zu gießenden Spule entspricht, und das in Richtung der Mittelachse der Spule durchdringt, und eine Nut, die so ausgebildet ist, dass sie dem Durchgangsloch gegenüberliegt und einer gewünschten Form der Spule entspricht, die in einer Umfangsrichtung der Spule auf einer äußeren Umfangsseite der Spule in mindestens zwei unterteilt ist, und die mehrere Stufen aufweist, die in Richtung der Mittelachse der Spule geschichtet sind; eine Spuleninnenform, die eine äußere Form hat, die dem Durchgangsloch entspricht, um in das Durchgangsloch eingesetzt zu werden, um die Nut zu schließen; eine Begrenzungsform zum Begrenzen der Spulenaußenform und der Spuleninnenform von zumindest beiden Seiten in einer Schichtrichtung; und eine Einspritzeinheit zum Einspritzen von geschmolzenem Metall in Richtung der Nut außerhalb der Spule durch einen Gießpfad, der mit der Nut in Verbindung steht.

Die EP 2 387 135 bezieht sich auf ein Verfahren zum Herstellen einer elektrotechnischen Spule mit einer oder mehreren Wicklung(en), wobei eine eine Spulengeometrie enthaltende Negativform, insbesondere eine verlorene Form oder eine Dauerform, bereitgestellt oder hergestellt wird, wobei ein zur Ausbildung der Wicklung(en) geeignetes Spulenmaterial, insbesondere ein elektrisch leitfähiges Metall, in flüssiger Form in diese Negativform gegossen wird, und wobei dieses Spulenmaterial erstarrt wird und/oder man dieses Spulenmaterial unter kontrollierte Bedingungen erstarren lässt.

Die JP 2015 001614 A zeigt eine Spulengießvorrichtung, die so konfiguriert ist, dass sie eine Spule gießt, die mehrfach um eine Mittelachse gewickelt ist. Die Spulengießvorrichtung umfasst: eine Form aus Metall; eine untere Form und eine obere Form; und einen Einspritzchip und einen Druckhaltechip. Die Metallgussform umfasst: ein Durchgangsloch, das in einer Größe ausgebildet ist, die einer inneren Umfangsfläche der zu gießenden Spule entspricht, und die Spule in einer axialen Mittelrichtung der Spule durchdringt; und eine Nut, die gegenüber dem Durchgangsloch ausgebildet ist und an eine gewünschte Form der Spule angepasst ist. Das Metallformwerkzeug ist in Umfangsrichtung der Spule auf der äußeren Umfangsseite der Spule in mindestens zwei Teile geteilt, und die Metallformwerkzeuge sind in der axialen Mittelrichtung der Spule für mehrere Stufen integriert. Die untere Matrize und die obere Matrize dringen jeweils in das Durchgangsloch ein, enthalten Verbindungslöcher, die koaxial mit dem Durchgangsloch und mit demselben Durchmesser wie dieses ausgebildet sind, und begrenzen die Formmatrize von beiden Seiten in einer Laminierungsrichtung. Der Einspritzchip und der Druckhaltechip haben einen Außendurchmesser, der im Wesentlichen gleich dem Durchmesser des Durchgangslochs und dem Durchmesser der Verbindungslöcher ist, und sind koaxial in der Mittelachsenrichtung der Spule innerhalb der Löcher beweglich. Zwischen den Chips wird ein Spalt gebildet, der mit einem geschmolzenen Metall gefüllt ist.

Die EP 3 208 013 A1 betrifft ein Verfahren zum Gießen eines Bauteils komplexer Geometrie, bei dem eine Gießform eingesetzt wird, von der wenigstens ein Formteil als verlorene Form ausgebildet ist. Das wenigstens eine als verlorene Form ausgebildete Formteil wird dabei aus einem Salz oder einer Salzmischung hergestellt. Wenigstens ein äußerer oder innerer Teil der Gießform, durch den die äußere bzw. innere Geometrie des Bauteils festgelegt wird, wird bei dem Verfahren aus mehr als zwei Formsegmenten zusammengesetzt, die vorzugsweise übereinander gestapelt werden.

Für gießtechnisch hergestellte Spulen werden nach Stand der Technik bei komplexen Geometrien ergänzend zu einer Form Kerne eingelegt oder Schieber verwendet, wodurch die Herstellung teuer oder ineffizient werden kann.

Weiterhin wird die Form aufgrund hoher Gießtemperaturen stark beansprucht, was zu Auswaschungen und Rissen in der Form führen kann. Diese Schädigungen führen zur Bildung von erhabenen Graten auf der Spulenoberfläche. Die Grate können die Qualität der hergestellten Spulen negativ beeinträchtigen und eine aufwendige Nachbearbeitung notwendig machen. In der Folge sind die Herstellungsprozesse aufwändig und die Standzeiten für die verwendeten Formen sehr kurz, so dass die Herstellung gegossener Spulen bisher oft wenig wirtschaftlich ist.

Aufgabe der vorliegenden Erfindung ist es, die oben genannten Probleme zumindest teilweise zu umgehen.

Dies wird durch ein Verfahren mit den Merkmalen des unabhängigen Anspruchs 1 sowie durch eine Dauerform bzw. durch eine Wendel mit den Merkmalen der nebengeordneten Ansprüche erreicht.

Vorteilhafte Ausgestaltungen ergeben sich aus den abhängigen Unteransprüchen sowie aus der Beschreibung und den Figuren.

Mit Hilfe des Verfahrens wird eine Wendel in einem Gießprozess hergestellt.

Das Verfahren umfasst dabei zumindest einen Schritt, in dem eine Dauerform bereitgestellt wird, die genau zwei in einer Formteilungsebene zusammenfügbare Formhälften aufweist.

Die Formhälften der Dauerform werden so zusammengefügt, dass die Dauerform in zusammengefügten Zustand eine Kavität aufweist, welche eine Form einer aufgebogenen Wendel vorgibt.

Die aufgebogene Wendel, die von der Kavität vorgegeben wird, hat dabei ein abgeflachtes Windungsquerschnittprofil mit zwei gegenüberliegende Flachseiten, einer Außenseite und einer der Außenseite gegenüberliegenden Innenseite.

Die Formteilungsebene verläuft dabei zumindest abschnittsweise entlang der Außenseite und/oder entlang der Innenseite und/oder entlang von Kanten des Windungsquerschnittprofils.

In einem weiteren Schritt des Verfahrens wird ein Gussmaterial in die Kavität eingebracht, um einen Gusskörper zu Erzeugen, der die von der Kavität vorgegebene Form der aufgebogenen Wendel besitzt.

In einem nachfolgenden Schritt wird die Dauerform geöffnet und der Gusskörper entnommen.

Anschließend werden an der Außenseite und/oder an der Innenseite und/oder an den Kanten des Gusskörpers verlaufende Grate entfernt. Diese genannten Grate erstrecken sich in der Formteilungsebene.

Die Flachseiten sind einander zugewandt, wenn der Gusskörper in die Form der Wendel gebracht wird. Die Innenseiten begrenzen einen Inneren Hohlraum der Wendel, in den beispielsweise ein Spulenkern eingebracht werden kann. Die der Innenseite abgewandte Außenseite ist typischerweise frei zugängig wenn der Gusskörper in der Form der Wendel vorliegt oder in die Form der Wendel gebracht wird.

Ein Vorteil des Verfahrens liegt darin, dass die Außenseite und die Innenseite und die Kanten, an denen die Formteilungsebene zumindest abschnittsweise verläuft, leicht zugängig sind, wenn der Gusskörper in der Form der Spule vorliegt oder in die Form der Spule gebracht wird. Grate entstehen in der Formteilungsebene, wenn das Gussmaterial in der Formteilungsebene zwischen die Formhälften gelangt. Entsprechend verlaufen die Grate zumindest abschnittsweise entlang der genannten leicht zugänglichen Bereiche und können mit geringem Aufwand entfernt werden.

In einer Ausführung des Verfahrens verläuft die Formteilungsebene überwiegend entlang der Außenseite und/oder der Innenseite und/oder der Kanten. Dabei kann eine Länge einer Schnittlinie definiert werden, in der die Formteilungsebene an dem in der Kavität liegenden Formteil entlang läuft. Entlang dieser Schnittlinie können Grate entstehen. Beispielsweise verläuft diese Schnittlinie über mindestens 60 % ihrer Länge entlang der Außenseite und/oder der Innenseite und/oder der Kanten, bevorzugt über mindestens 75 % ihrer Länge, besonders bevorzugt über mindestens 90 % ihrer Länge.

Bei dem Verfahren umfasst die Dauerform genau zwei Formhälften. Dabei werden keine zusätzlichen Schieber oder Kerne verwendet.

Es ist bei dem Verfahren angedacht, dass die Kavität nicht die Form der fertig gebogenen Wendel vorgibt, sondern die Form der aufgebogenen Wendel. Der Gusskörper kann in solchen Ausführungen nach dem Entnehmen in die Form der Wendel gebogen werden. Die geschieht beispielsweise durch Zusammendrücken, orthogonal zu den Flachseiten. Das Zusammendrücken kann auch durch Einschieben eines Dorns in den Hohlraum der Wendel geschehen, wobei der Dorn an einem Ende ein Flachteil aufweisen kann, welches gegen die Flachseite der Wendel gedrückt wird. Alternativ oder zusätzlich zum Biegen in die Form der Wendel kann durch Einschieben des Dorns ein Umbiegen von in den Hohlraum ragenden Graten bewirkt werden.

Die Formteilungsebene kann in den Abschnitten, in denen sie entlang der Außenseite und/oder der Innenseite und/oder der Kanten des Windungsquerschnittprofils verläuft, so ausgebildet sein, dass sie einen Winkel von mehr als 0° und weniger als 180° mit der Außenseite und/oder der Innenseite einschließt, so dass entstehende Grate sich ausgehend von der Innenseite weiter nach innen oder ausgehend von der Außenseite weiter nach außen erstrecken. Das heißt, die Formteilungsebene und von ihr verursachte Grate sind insbesondere nicht parallel zu der Außenseite und der Innenseite. Dadurch sind die entstehenden Grate besonders gut entfernbar.

Alternativ oder zusätzlich kann die Kavität zumindest in einem Teil der Bereiche, in denen die Formteilungsebene entlang der Außenseite und/oder der Innenseite und/oder der Kanten des Windungsquerschnittprofils verläuft, zusätzliche Einbuchtungen aufweisen. Durch die zusätzlichen Einbuchtungen in der Kavität wird entsprechend zusätzliches Material an dem Gusskörper erzeugt. Das zusätzliche Material wird für die angedachte Spule nicht benötigt und stellt Opferstrukturen dar, die sich an der Außenseite und/oder der Innenseite und/oder den Kanten des wendelförmigen Gusskörpers in der Formteilungsebene erstrecken. Die Opferstrukturen werden in einem Nachbearbeitungsschritt nach dem Entnehmen des Gusskörpers zusammen mit den Graten die an ihnen verlaufen, entfernt.

Zum Entfernen der Grate und/oder der Opferstrukturen kann zum Beispiel durch den oben beschriebenen Dorn und/oder durch Fräsprozesse und/oder durch Schleifprozesse erfolgen.

Das Gussmaterial kann beispielsweise Aluminium und/oder Kupfer umfassen. Eine Gießtemperatur kann zum Beispiel über 1100°C liegen. Als Gussverfahren kommen beispielsweise Druckgussverfahren oder Kokillengussverfahren oder Niederdruckgussverfahren in Frage.

Aufgrund der komplexen Geometrie der Wendel bzw. der aufgebogenen Wendel und des dafür benötigten Werkzeugs, verlaufen die Formteilungsebene und somit auch die Grate üblicherweise bereichsweise auch entlang der Flachseiten der Wendel. Das kann insbesondere bei Dauerformen, die genau zwei Formhälften aufweisen der Fall sein. Die Formteilungsebene verläuft dann entlang der Flachseiten von der Innenseite zu der Außenseite.

Für zumindest einen der Bereiche, in denen die Formteilungsebene entlang der Flachseiten verläuft, kann die Dauerform eine sich entlang der Formteilungsebene erstreckende Ausbauchung aufweisen, die in die Kavität ragt, so dass der Gusskörper an der entsprechenden Flachseite eine entsprechende Einbuchtung erhält. Ein dort entstehender Grat liegt dann in der Einbuchtung. Wenn der Gusskörper in der Form der Wendel vorliegt, kann dieser Grat, der an der Flachseite in der Einbuchtung liegt, benachbarte Flachseiten nicht berühren und ist somit unschädlich.

In einer beispielhaften Ausführung wird für jeden Bereich, in dem die Formteilungsebene entlang einer der Flachseiten verläuft eine Einbuchtung in der Wendel bereitgestellt. In einer anderen Ausführung wird nur auf einer ersten der Flachseiten für jeden Bereich, in dem die Formteilungsebene entlang dieser Flachseiten verläuft, eine Einbuchtung in der Wendel bereitgestellt. Grate, die an der gegenüberliegenden zweiten Flachseite verlaufen, können so in einer Ebene mit den Graten bzw. Einbuchtungen der ersten Flachseite positioniert werden, dass sie in den Einbuchtungen der ersten Flachseite positioniert sind, wenn die Spule zusammengedrückt wird.

Wenn an der ersten der Flachseiten der Wendel Einbuchtungen bereitgestellt werden, ist es auch möglich, an der zweiten der Flachseiten statt weiterer Einbuchtungen Ausbauchungen, die sich entlang der Formteilungsebene erstrecken, bereitzustellen. Diese Ausbauchungen kommen innerhalb der Einbuchtungen zu liegen, wenn der Gusskörper in der Form der Wendel vorliegt und zusammengedrückt wird, vorzugsweise jedoch so, dass die Grate die in den Einbuchtungen liegen und die Grate, die an den Ausbauchungen liegen die jeweils andere Flachseite nicht berühren, indem die Einbuchtung entsprechend größer ist als die Ausbauchung. Dadurch kann ein durch die Einbuchtungen entstehender Querschnittsverlust zumindest teilweise kompensiert werden.

Die Dauerform für die Wendel, die zur Durchführung des vorgestellten Verfahrens geeignet ist, umfasst zwei entlang einer Formteilungsebene zusammenfügbare Formhälften, wobei die Formhälften der Dauerform in zusammengefügten Zustand eine Kavität aufweisen, welche für den Gusskörper die Form der aufgebogenen Wendel vorgibt. Die aufgebogene Wendel hat das abgeflachte Windungsquerschnittprofil, wobei das Windungsquerschnittprofil die zwei gegenüberliegenden Flachseiten , die Außenseite und die der Außenseite gegenüberliegende Innenseite aufweist. Die Flachseiten sind dabei einander zugewandt sind, wenn der Gusskörper in Form einer Wendel gebracht wird.

Die Formteilungsebene verläuft zumindest abschnittsweise entlang der Außenseite und/oder entlang der Innenseite und/oder entlang von Kanten des Windungsquerschnittprofils.

Dementsprechend können an dem Gussteil nach dem Entnehmen aus der Form Grate vorliegen, die sich in der beschriebenen Formteilungsebene erstrecken. Das entnommene Gussteil stellt vor einer möglichen Weiterbearbeitung ein typisches Zwischenprodukt dar, das sich durch die beschriebene Lage der Grate auszeichnet.

Bei der Dauerform kann es sein, dass die Formteilungsebene innerhalb jeder Windung der von der Kavität definierten aufgebogenen Wendel entlang der Flachseiten von der Innenseite zu der Außenseite verläuft. Es kann beispielsweise sein, dass die Formteilungsebene pro Windung je zweimal entlang der Innenseite und entlang der Außenseite verläuft. Die Dauerform kann dabei zumindest in einem der Bereiche, in denen die Formteilungsebene entlang der Flachseiten verläuft, eine sich entlang der Formteilungsebenen erstreckende in die Kavität ragende und diese verjüngende Ausbauchung auf-
weisen. Die Ausbauchung dient zum Herstellen der Einbuchtung an der Flachseite.

Wenn eine Ausbauchung an der Flachseite vorgesehen ist, umfasst die Dauerform eine zu der Ausbauchung komplementäre Aussparung, durch die die Kavität bereichsweise vergrößert wird, und die entlang der Formteilungsebene verläuft. Das in diese Aussparung gelangende Gussmaterial kann dann die Ausbauchung bilden.

Die Wendel kann insgesamt beispielsweise mehr als zwei Windungen aufweisen.

Die gegossene Wendel, die Wendel, die sich mit dem beschriebenen Verfahren oder mit Hilfe der beschriebenen Dauerform herstellen lässt weist ein das abgeflachte Windungsquerschnittprofil auf. Das Windungsquerschnittprofil zeigt die zwei gegenüberliegende Flachseiten, eine Außenseite und eine der Außenseite gegenüberliegende Innenseite aufweist. Die Flachseiten sind einander zugewandt.

Typischerweise weist die Wendel an der Innenseite und an der Außenseite keine Grate auf, da diese in dem Verfahren entfernt wurden. Grate zeigen sich üblicherweise einzig auf den Flachseiten und verlaufen jeweils zwischen der Innenseite und der Außenseite. Ihr verlauf kann so gewählt sein, dass die Länge jedes die Flachseite auf diese Weise überlaufenden Grats möglichst gering ist, zum Beispiel jeweils höchstens 50 % länger als eine Breite der Flachseite.

Es kann vorgesehen sein, dass an zumindest einer ersten der beiden Flachseiten oder an beiden Flachseiten von der Außenseite zur Innenseite verlaufende Einbuchtungen vorhanden sind. In diesen Einbuchtungen können die Grate verlaufen.

Es kann auch sein, dass an der ersten der Flachseiten Einbuchtungen und an der zweiten Flachseite von der Außenseite zur Innenseite verlaufende Ausbauchungen vorhanden sind, die in die Einbuchtungen ragen.

Es sei betont, dass Merkmale, die nur im Zusammenhang mit dem Verfahren beschrieben wurden auch für die Dauerform und/oder den Gusskörper beansprucht werden können und anders herum.

Gleichermaßen können die im Zusammenhang mit der Dauerform beschriebenen Merkmale auch für den Gusskörper beansprucht werden und anders herum.

Im Folgenden wird die Erfindung anhand von Figuren beispielhaft näher erläutert.

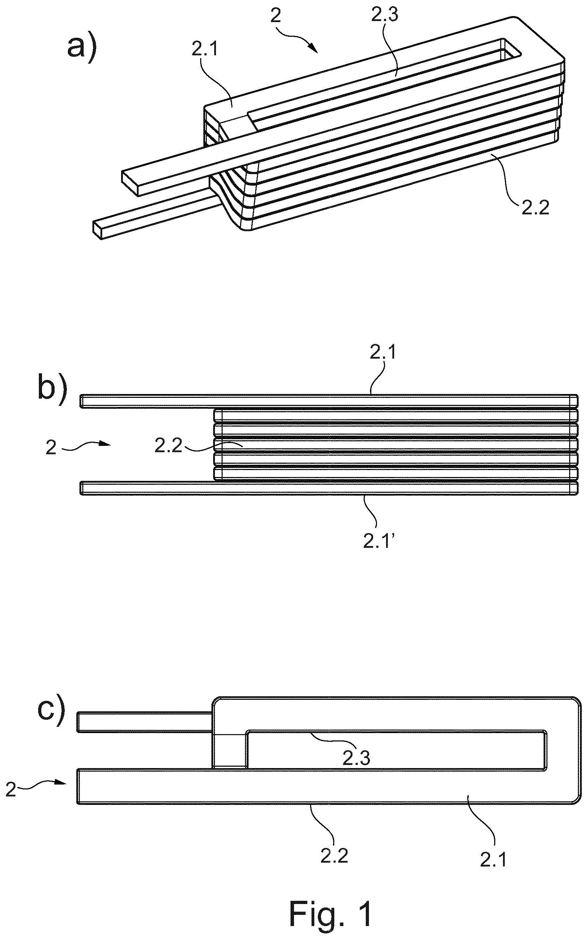

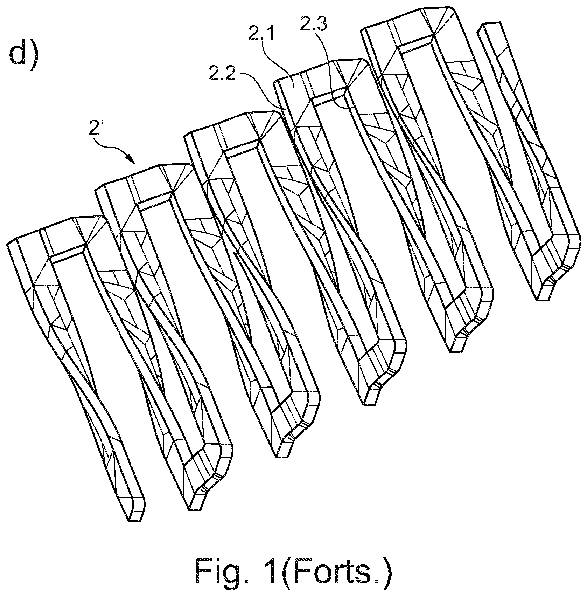

Es zeigen
- Figuren 1 a-c: einen Gusskörper in Form einer Wendel,
- Figur 1 d: den Gusskörper in Form einer aufgebogenen Wendel,
- Figuren 2 a-c, 3 und 4: den Gusskörper innerhalb einer Kavität einer Dauerform,
- Figuren 5 a-c: Schnittansichten des Gusskörpers innerhalb der Kavität der Dauerform,
- Figuren 6 a und b: eine Nachbearbeitung des Gusskörpers nach Entnahme aus der Dauerform,
- Figuren 7 a und b: eine Formhälfte der Dauerform mit zusätzlichen Ausbauchungen, und
- Figuren 8, 9 und 10 a und b: den Gusskörper mit Einbuchtungen an Flachseiten.

Figuren 1 a-d zeigen einen Gusskörper, der in den Figuren 1 a-c in Form einer Wendel 2 und in Figur 1d in Form einer aufgebogenen Wendel 2' vorliegt. Aus der in der Figur 1d gezeigten Form kann der Gusskörper in die Form der Wendel 2 (wie in Fig. 1a-c gezeigt) umgebogen werden.

Figur 1a zeigt eine Schrägansicht des Gusskörpers als Wendel 2, Figur 1b eine Seitenansicht und Figur 1c eine Draufsicht. Die Wendel hat ein abgeflachtes Windungsquerschnittprofil. Das Windungsquerschnittprofil ist im vorliegenden Fall rechteckig ausgebildet und hat zwei gegenüberliegende Flachseiten 2.1, 2.1', eine Außenseite 2.2 und eine der Außenseite 2.2 gegenüberliegende Innenseite 2.3. Ein innerer Hohlraum der Wendel 2, der von den Windungen umlaufen und von der Innenseite 2.3 begrenzt wird, ist ebenfalls rechteckig.

Die äußeren Abmessungen der Wendel, die Außenseite 2.2 umlaufend, sind ebenfalls rechteckig bzw. quaderförmig.

Für die Wendel können aneinandergrenzende Windungen so definiert werden, dass jede Windung einen vollständigen Umlauf um den inneren Hohlraum von 360° beschreibt. Gezeigt sind sieben Windungen.

Der Windungsquerschnitt sowie die Ausgestaltung des Hohlraums können durch wickeln nicht erreicht werden.

Äußere Abmessungen der Wendel können in jeder Richtung beispielsweise zwischen 2 cm und 20 cm betragen.

Diese Anmeldung bezieht sich zum einen auf die hier gezeigte Art von Gusskörper als Wendel oder aufgebogene Wendel.

Die Wendel kann mit Verfahren, auf die sich diese Anmeldung ebenfalls bezieht, vorteilhaft hergestellt werden. Weiterhin kann die Wendel mit Hilfe von Dauerformen, auf die sich diese Anmeldung obendrein bezieht, vorteilhaft hergestellt werden. Wendel, Verfahren und Dauerform werden nachfolgend anhand der übrigen Figuren noch näher beschrieben.

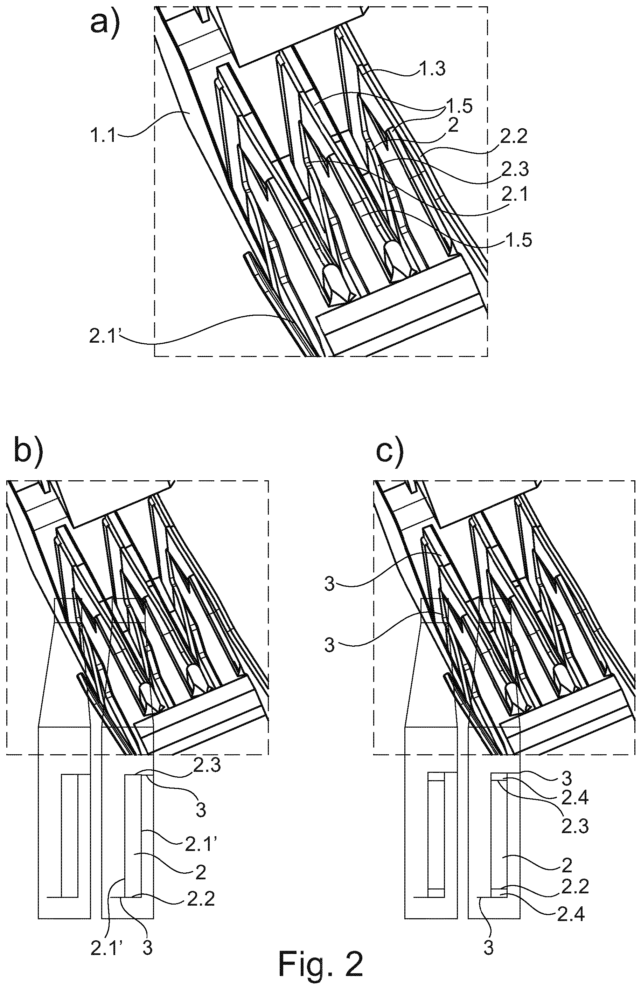

Figur 2 zeigt den Gusskörper während eines Schritts des Verfahrens zu seiner Herstellung, innerhalb einer Kavität 1.3 einer Dauerform 1. Dabei ist nur eine Formhälfte 1.1 der Dauerform 1 gezeigt. Eine zweite Formhälfte 1.2 der Dauerform 1 ist komplementär zu der ersten Formhälfte 1.1 aufgebaut und wurde zur besseren Veranschaulichung in der Figur 2 weggelassen. Die zweite Formhälfte ist derart ausgebildet, dass die erste 1.1 und die zweite Formhälfte 1.2 in einer Formteilungsebene 1.5 zusammenfügbar sind und sich zwischen den beiden Formhälften die Kavität 1.3 erstreckt. Der Verlauf der Kavität 1.3 ist in der Figur durch den eingezeichneten Gusskörper erkennbar, der die Form der Wendel 2 aufweist und die Kavität 1.3 ausfüllt. Die Merkmale der Wendel 2 sind entsprechend auf die Kavität 1.3 übertragbar und umgekehrt. Das heißt, auch die Kavität ist rechteckig ausgebildet und hat die gegenüberliegenden Flachseiten 2.1, 2.1', die Außenseite 2.2 und die der Außenseite 2.2 gegenüberliegende Innenseite 2.3.

Weiterhin ist aus dieser Figur somit auch die Gestalt der zweiten Formhälfte 1.2 ersichtlich.

Die Wendel 2 ist lediglich leicht auseinandergezogen aber nicht aufgebogen und weist ansonsten die Merkmale auf, die in Figur 1 gezeigt sind.

Wie in der Figur zu sehen ist, verläuft die Formteilungsebene 1.5 zumindest abschnittsweise entlang der Außenseite 2.2 entlang der der Innenseite 2.3 sowie entlang von Kanten des Windungsquerschnittprofils. Insbesondere erstreckt sie sich in Bereichen parallel zur Innenseite 2.3 und zur Außenseite 2.2. Sie überläuft innerhalb jeder Windungen jede der beiden Flachseiten 2.1, 2.1' zweimal.

Zum Herstellen des Gusskörpers wird ein Gussmaterial in die Kavität 1.3 der Dauerform 1 eingefüllt. Die Dauerform 1 weist hierfür eine entsprechende Öffnung auf. Es können dabei Druckgussverfahren, Kokillengussverfahren oder Niederdruckgussverfahren angewandt werden. Das Gussmaterial umfasst Aluminium und/oder Kupfer. Eine Gießtemperatur liegt über 1100°C.

Es ist dabei möglich, dass dabei Gussmaterial außerhalb der Kavität 1.3 in die Formteilungsebene 1.5 zwischen den beiden Formhälften 1.1, 1.2 gelangt. Dadurch können Grate 3 entstehen. Aus dem Verlauf der Formteilungsebene 1.5 kann somit auf die Position der Grate 3 geschlossen werden. Mögliche Grate 3 erstrecken sich demnach bei dem aus der in der Figur 2 gezeigten Dauerform entnommenen Gussteil ausgehend von der Außenseite 2.2 oder der Innenseite 2.3 parallel zu der Außenseite 2.2 bzw. Innenseite 2.3 sowie in Bereichen, in denen die Formteilungsebene 1.5 entlang der Flachseiten 2.1, 2.1' verläuft, entlang der jeweiligen Flachseite 2.1, 2.1' und orthogonal dazu.

Figuren 2b und 2c zeigen jeweils nochmals die Ansicht aus Figur 2a, wobei jeweils zwei Bereiche markiert sind, für welche Schnitte durch die Wendel 2 unterhalb der jeweiligen Ansicht vergrößert dargestellt sind. In den Schnitten sind die Lage und Ausrichtung der möglichen Grate 3 illustriert. Wie im Zusammenhang mit Figur 2a dargelegt, erstrecken sie sich aufgrund des Verlaufs der Teilungsebene 1.5 ausgehend von inneren und äußeren Kanten an der Außenseite 2.2 und der Innenseite 2.3. Sie verlaufen dabei parallel zu der Außenseite 2.2 und der Innenseite 2.3, jeweils nur in Richtung einer der Flachseiten 2.1, 2.1'.

Die Grate werden in einem Verfahrensschritt nach dem Entnehmen des Gussteils aus der Dauerform 1 entfernt. Aufgrund ihrer Lage ist das Entfernen leicht möglich.

In Figur 2c ist dabei noch gezeigt, dass die Kavität 1.3 zusätzliche Einbuchtungen aufweist, die sich an der gesamten Außenseite 2.2 und der gesamten Innenseite 2.1, inklusive der jeweiligen Kanten erstrecken. Sie dienen zum Herstellen von Opferstrukturen 2.4, des wendelförmigen Gusskörpers. Sie verlaufen so in der Formteilungsebene 1.5, dass die Grate 3 zumindest bereichsweise an den Opferstrukturen 2.4 verlaufen. Die Opferstrukturen werden in einem Nachbearbeitungsschritt nach dem Entnehmen des Gusskörpers zusammen mit den Graten 3, die an ihnen verlaufen.

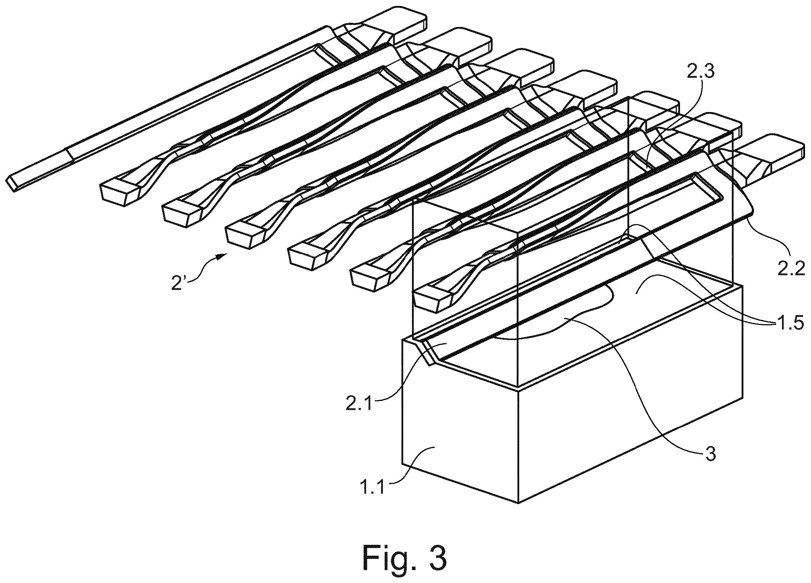

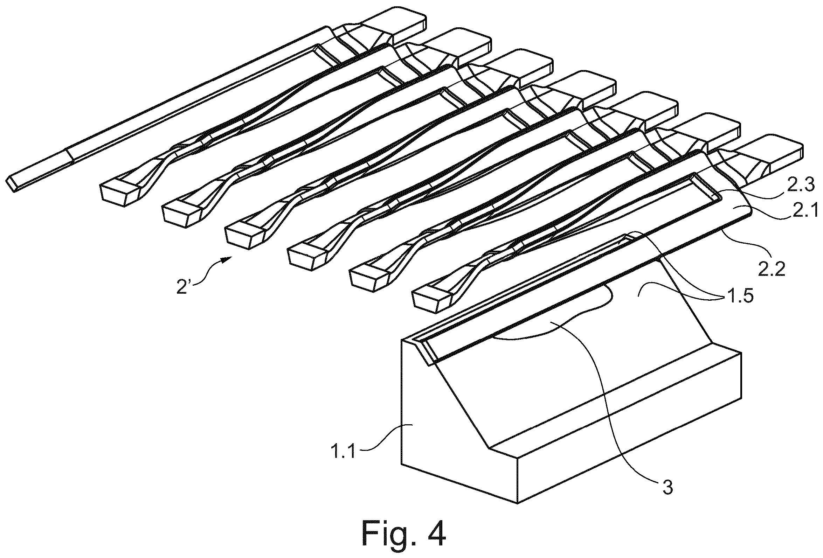

Figuren 3 und 4 zeigen Dauerformen 1 mit Kavitäten 1.3, die so ausgebildet sind, dass die darin hergestellte Gussform die Form der aufgebogenen Wendel 2' aufweist, die nach Entnahme in die Form der Wendel 2 gebogen wird. Es ist jeweils wieder nur die erste Formhälfte 1.1 gezeigt und die zweite Formhälfte 1.2 aus Gründen der Sichtbarkeit weggelassen. Es kann hier mit nur zwei Formhälften und ohne Verwendung von Kernen oder Schiebern die aufgebogene Wendel 2' hergestellt werden.

Zum Herstellen des Gusskörpers wird ein Gussmaterial in die Kavität 1.3 der Dauerform 1 eingefüllt. Die Dauerform 1 weist hierfür eine entsprechende Öffnung auf. Es können dabei Druckgussverfahren, Kokillengussverfahren oder Niederdruckgussverfahren angewandt werden. Das Gussmaterial umfasst Aluminium und/oder Kupfer. Eine Gießtemperatur liegt über 1100°C.

Die Formteilungsebene 1.5, die in den Figuren 3 und 4 jeweils exemplarisch in einem Ausschnitt dargestellt ist, weist im Fall der Figur 3 einen Winkel α von ca. 45° sowohl zu der Außenseite 2.2 als auch zu der Innenseite 2.3 der aufgebogenen Wendel 2' auf. Entsprechend erstrecken sich mögliche Grate 3, von denen einer exemplarisch dargestellt ist, mit diesem Winkel α von der Außenseite 2.2 bzw. der Innenseite 2.3 weg. Das ist im Unterschied zu der Ausführung aus Figur 2, wo die Grate 3 parallel zu Außenseite 2.2 bzw. Innenseite 2.3 verlaufen. Dies hat den Effekt, dass die Grate 3 noch leichter entfernt werden können. In Figur 4 ist die Formteilungsebene 1.5 so ausgebildet, dass der Winkel α der Grate 3 zur Innenseite 2.3 ungefähr 45° beträgt und zur Außenseite 90°.

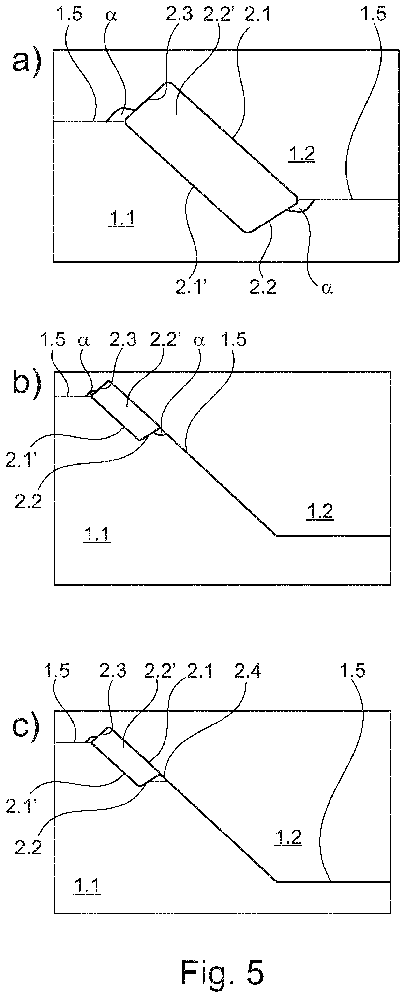

In Figur 5 sind Schnitte durch die zwei Formhälften 1.1, 1.2 der Dauerform 1 und den in der zwischen ihnen gebildeten Kavität 1.3 liegenden Gusskörper gezeigt, wobei insbesondere die Formteilungsebene 1.5 und ihre Lage im Verhältnis zu dem Gusskörper illustriert wird. Es kann sich um den Gusskörper in Form der Wendel 2 oder in Form der aufgebogenen Wendel 2' handeln.

Im Bereich des in Figur 5a gezeigten Schnitts (es kann sich beispielsweise um einen Schnitt durch die Konfiguration aus Figur 3 handeln) beträgt der Winkel α zwischen der Außenseite 2.2 und der Formteilungsebene 1.5 ca. 45°. Die Formteilungsebene 1.5 erstreckt sich dabei von einer an der Außenseite 2.2 liegenden Kante. Der Winkel α zwischen der Innenseite 2.2 und der Formteilungsebene 1.5 beträgt ebenfalls ca. 45° und die Formteilungsebene 1.5 erstreckt sich hier von einer an der Innenseite 2.2 liegenden Kante.

Im Bereich des in Figur 5b gezeigten Schnitts (es kann sich beispielsweise um einen Schnitt durch die Konfiguration aus Figur 4 handeln) erstreckte sich die Formteilungsebene 1.5 wieder ausgehend von Kanten, die an der Inneseite 2.3 bzw. der Außenseite des Gussteils bzw. der Kavität 1.3 liegen. Der Winkel α zwischen der Innenseite 2.3 und der Formteilungsebene 1.5 beträgt ca. 45°. Der Winkel α zwischen der Außenseite 2.2 und der Formteilungsebene 1.5 beträgt ca. 90°.

Figur 5c zeigt eine Abwandlung der Darstellung aus Figur 5b. Die Formteilungsebene 1.5 erstreckt sich dabei an der Außenseite nicht direkt von der Kante des Gussteils ausgehend, sondern grenzt an eine Opferstruktur 2.4, die als an der Außenseite 2.2 angeordnetes zusätzliches Gussmaterial bereitgestellt wird und danach zusammen mit einem möglichen Grat 3 entfernt werden kann.

In allen Konfigurationen aus den Figuren 5 a bis c schließt die Formteilungsebene 1.5 also einen Winkel von mehr als 0 Grad und weniger als 180 Grad mit der Außenseite 2.2 und/oder der Innenseite 2.3 ein, ist also zu keiner der beiden Seiten parallel.

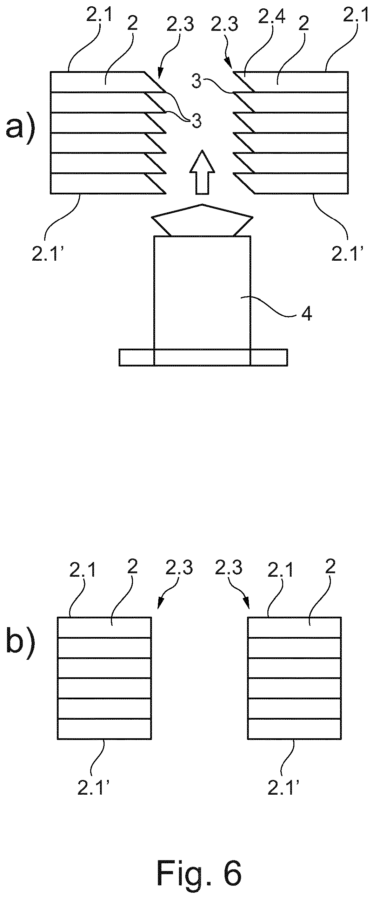

Figur 6 zeigt, wie in einem Verfahren gemäß dieser Anmeldung Grate 3, die an der Innenseite 2.3 des Gussteils liegen, entfernt werden. Die Grate erstrecken sich im inneren Hohlraum des Gussteils, wenn dieses in Form der Wendel 2 vorliegt. Zum Entfernen der Grate wird ein Dorn 4 in den inneren Hohlraum eingeführt, der die Abmessungen des inneren Hohlraums besitzt. Jegliches überschüssiges Material, welches sich ausgehend von dem Gussteil in den inneren Hohlraum erstreckt wird dadurch umgebogen oder abgetragen. Dieses überschüssige Material umfasst insbesondere die Grate 3. Weiterhin kann es, so wie hier gezeigt, die Opferstrukturen 2.4 umfassen, die an der Innenseite 2.3 der Wendel 2 positioniert sind. Der Dorn 4 kann auch dann in den inneren Hohlraum eingeführt werden, wenn das Gussteil anfangs, nach Entnahme aus der Dauerform 1, in der Form der Wendel 2 vorliegt, jedoch leicht auseinander gezogen ist. Ebenso kann der Dorn 4 in den inneren Hohlraum eingeführt werden, wenn der Gusskörper zu Beginn, nach Entnahme aus der Dauerform 1, in Form der aufgebogenen Wendel 2vorliegt. Der Dorn 4 weist an einem Ende ein Flachteil auf, welches an der Flachseite 2.1' angreift und das Gussteil, bei gleichzeitigem Gegendruck von der anderen Flachseite 2.1, in die Form der Wendel biegen kann.

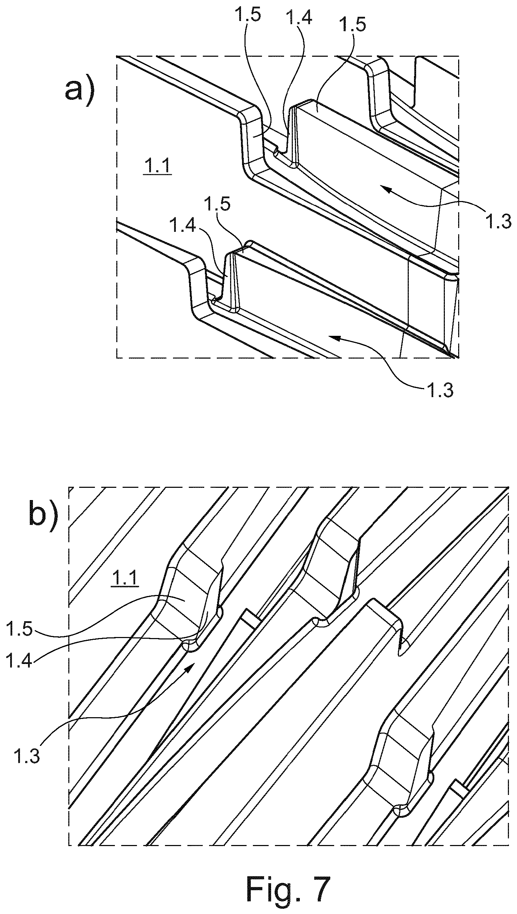

Figur 7 zeigt die erste Formhälfte 1.1 der Dauerform 1 mit der Kavität 1.3. Figur 7 a zeigt eine Ansicht schräg von der Seite und Figur 7 b eine Ansicht von schräg oben. Dabei weist die Dauerform 1 in einigen der Bereiche, in denen die Formteilungsebene 1.5 entlang einer der Flachseiten 2.1, 2.1' verläuft, eine sich entlang der Formteilungsebenen 1.5 erstreckende Ausbauchung 1.4 auf. Der mit dieser Dauerform 1 gefertigte Gusskörper erhält dadurch an den Flachseiten 2.1, 2.1' entsprechende Einbuchtungen 2.5, die zu den Ausbauchungen 1.4 komplementär sind und von der Innenseite 2.3 zur Außenseite 2.2 verlaufen. Nachdem entlang dieser Ausbauchungen 1.4 die Formteilungsebene 1.5 verläuft können mit dieser Dauerform die Grate 3 in die Einbuchtungen 2.5 verlegt werden.

Die beschriebene Ausgestaltung ist auch bei Werkzeugen, die ansonsten die Merkmale aus den Figuren 2-5 aufweisen, möglich.

Zum Herstellen des Gusskörpers wird ein Gussmaterial in die Kavität 1.3 der Dauerform 1 eingefüllt. Die Dauerform 1 weist hierfür eine entsprechende Öffnung auf. Es können dabei Druckgussverfahren, Kokillengussverfahren oder Niederdruckgussverfahren angewandt werden. Das Gussmaterial umfasst Aluminium und/oder Kupfer. Eine Gießtemperatur liegt über 1100°C.

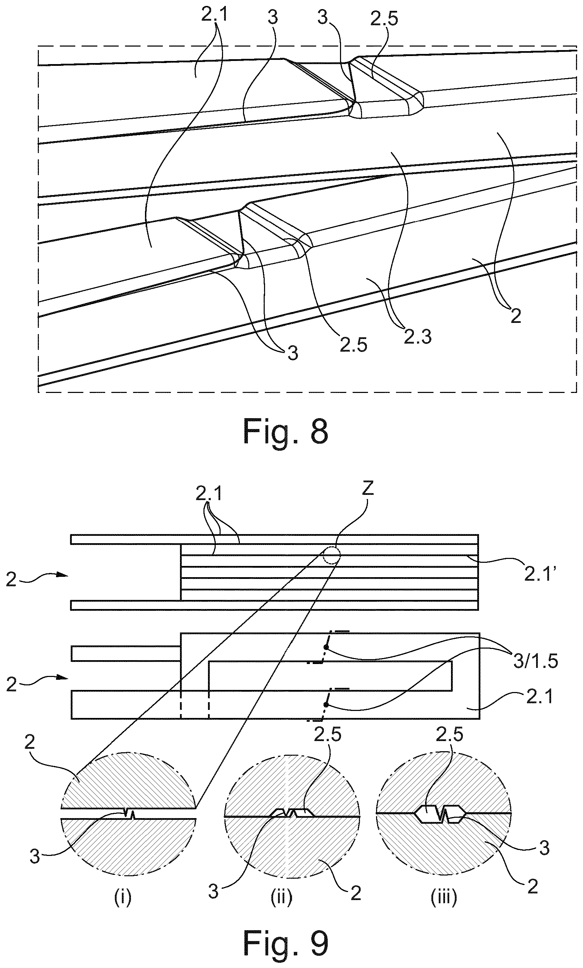

Figuren 8 und 9 illustrieren Gusskörper, die beispielsweise mit der Dauerform 1 aus Figur 7 hergestellt sind. Sie weisen die Einbuchtungen 2.5 an einer oder beiden der Flachseiten 2.1, 2.1' auf.

In Figur 8 sind dabei Abschnitte von Windungen des Gusskörpers gezeigt, in denen Einbuchtungen an der ersten Flachseite 2.1 angeordnet sind. Die Einbuchtungen 2.5 verlaufen orthogonal zu den Kanten des Gusskörpers, die Außenseite 2.2 und die Innenseite 2.3 verbinden. Die Position von möglichen Graten 3 ist in der Figur 8 kenntlich gemacht. Sie verlaufen gemäß der in Figur 7 gezeigten Ausführung der Dauerform 1 diagonal durch die Einbuchtungen 2.5 und sind dadurch unschädlich, da sie die zweite Flachseite 2.1' auch bei Zusammendrücken des Gussteils als Wendel 2 nicht berühren. Im Bereich der Kanten, wenn die Formteilungsebene 1.5 und somit die Grate 3 in den Bereich der Außenseite 2.2 bzw. Innenseite 2.3 kommen, werden die Formteilungsebene 1.5 und somit der Grat 3 an der Kante entlang geführt und können in einem Nachbearbeitungsschritt, zusammen mit möglichen dort vorhandenen Opferstrukturen 2.4, abgetragen werden. In der Figur 8 ist an der zweiten Flachseite 2.1' keine Einbuchtung 2.5 vorgesehen, da dort verlaufende Grate 3 durch die Formteilungsebene 1.5 so vorgegeben sind, dass sie bei Zusammendrücken der Wendel 2 in die Aussparungen 2.5 der ersten Flachseite 2.1 ragen und dadurch ebenfalls unschädlich sind.

Figur 9 illustriert weitere Mögliche Ausgestaltungen, bei denen an Flachseiten liegende Grate 3 durch Einbuchtungen 2.5 unschädlich gemacht werden.

Oben in der Figur ist die Wendel 2 in der Seitenansicht aus Figur 1 b gezeigt. In dieser Seitenansicht ist ein Bereich Z markiert, der unten in der Figur 9 für drei Ausführungen (i), (ii), (iii) der Wendel vergrößert dargestellt wird.

In der Mitte der Figur 9 ist die Draufsicht aus Figur 1c gezeigt, in der der Verlauf der Formteilungsebene 1.5 und somit der Verlauf der Grate 3 über die Flachseiten 2.1, 2.1', von der Außenseite 2.2 zur Innenseite 2.3, dargestellt ist. Eben dieser Grat 3 wird unten in der Figur nun für die drei Ausführungen (i), (ii), (iii) vergrößert gezeigt.

Ausführung (i) ist dabei eine Ausführung bei der gar keine Einbuchtung 2.5 vorhanden ist. Bei solchen Ausführungen kann es sein, dass die Grate 3 in einem Nachbearbeitungsschritt an Außenseite 2.2 und/oder Innenseite 2.3 und/oder den Flachseiten 2.3 entfernt werden müssen.

Ausführung (ii) zeigt an nur einer Flachseite 2.1' eine Einbuchtung 2.5. Der Grat 3 verläuft an beiden Flachseiten 2.1, 2.1' innerhalb dieser Einbuchtung 2.5, wobei der Grat 3 an der einen Flachseite 2.1 gegenüber der anderen Flachseite 2.1' so versetzt ist, dass sich die Grate 3 der einander zugewandten Flachseiten 2.1, 2.1' auch dann nicht berühren, wenn die Wendel 2 wie hier gezeigt komplett zusammengedrückt wird.

Ausführung (iii) ist eine Ausführung, bei der an beiden Flachseiten 2.1, 2,1' die Einbuchtungen 2.5 vorliegen. Die Grate 3 sind wie in (ii) gegeneinander versetzt und können sich nicht berühren. In dieser Ausführung können noch größere Grate 3 toleriert werden als in (ii).

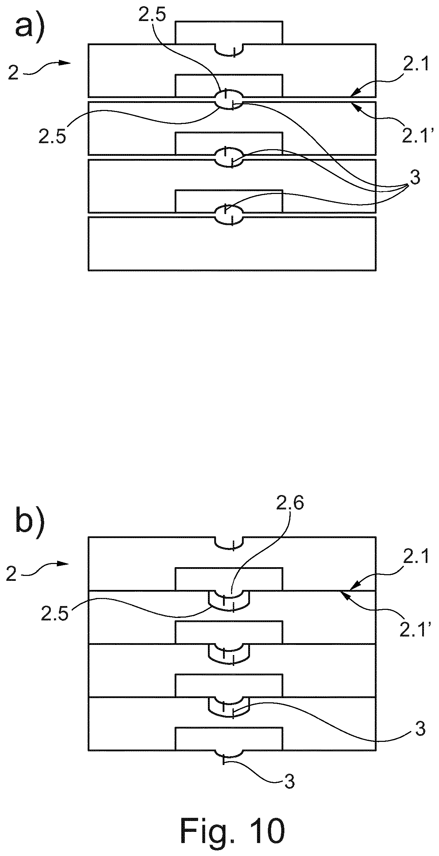

Figur 10 zeigt nochmals die Wendel 2, bei der Grate 3, die an Flachseiten Verlaufen, unschädlich gemacht werden sollen. Die Ansicht ist wie in Figur 9 unten gewählt.

Figur 10 a weist dabei ähnlich wie die Ausführung (iii) an beiden Flachseiten 2.1, 2.1' Einbuchtungen 2.5 auf. Die entsprechende Dauerform hat also an beiden Flachseiten 2.1, 2.1' die zu den Einbuchtungen 2.5 komplementären Ausbauchungen 1.4.

Im Unterschied hierzu hat die in der Figur 10 b gezeigte Ausführung an der Flachseite 2.1' Einbuchtungen 2.5, an der anderen Flachseite 2.1 jedoch Ausbauchungen 2.6. Diese Ausbauchungen 2.6 der Wendel 2 sind ähnlich wie die Einbuchtungen 2.5 positioniert, verlaufen also entlang der Formteilungsebene 1.5. Grate 3 erstrecken sich demnach also auch an den Ausbauchungen 2.6. Wenn die Wendel 2 wie in der Figur 10 b gezeigt zusammengedrückt wird, werden die Ausbauchungen 2.6 und die daran befindlichen Grate 3 in die Einbuchtungen 2.5 gedrückt. Abmessungen der Ausbauchungen 2.6 sind dabei kleiner als Abmessungen der Einbuchtungen 2.5, so dass die Ausbauchungen 2.6 und die Grate 3 in den Einbuchtungen 2.5 Platz finden. Durch das zusätzliche Material, welches in Form der Ausbauchungen 2.6 an der Flachseite 2.1 zur Verfügung gestellt wird, kann ein Querschnittverlust zumindest teilweise kompensiert werden. Die Dauerform 1 weist zur Herstellung eines solchen Gussteils wie es in Figur 10 b gezeigt ist an einer der Flachseiten 2.1, 2.1' Aussparungen auf, die sich in der Formteilungsebene 1.5 erstrecken und die Ausbauchungen 2.6 vorgeben. An der anderen der beiden Flachseiten 2.1, 2.1' weist sie hingegen die Ausbauchungen 1.4 auf, die die Einbuchtungen 2.5 vorgeben.

### Bezugszeichenliste

- 1: Dauerform
- 1.1: Erste Formhälfte
- 1.2: Zweite Formhälfte
- 1.3: Kavität
- 1.4: Ausbauchung der Dauerform
- 1.5: Formteilungsebene
- 2: Wendel
- 2': Aufgebogene Wendel
- 2.1, 2.1': Flachseite
- 2.2: Außenseite
- 2.3: Innenseite
- 2.4: Opferstruktur
- 2.5: Einbuchtung
- 2.6: Ausbauchung
- 3: Grat
- 4: Dorn

## Patentansprüche

1. Verfahren zur Herstellung einer Wendel (2), zumindest die folgenden Schritte umfassend:
- Bereitstellen einer Dauerform (1) mit genau zwei in einer Formteilungsebene (1.5) zusammenfügbaren Formhälften (1.1, 1.2);
- Zusammenfügen der genau zwei Formhälften (1.1, 1.2) der Dauerform (1), sodass die Dauerform (1) in zusammengefügten Zustand eine Kavität (1.3) aufweist, welche eine Form einer aufgebogenen Wendel (2') vorgibt, wobei die vorgegebene aufgebogene Wendel (2') ein abgeflachtes Windungsquerschnittprofil vorgibt, welches zwei gegenüberliegende Flachseiten (2.1, 2.1'), eine Außenseite (2.2) und eine der Außenseite (2.2) gegenüberliegende Innenseite (2.3) aufweist, und wobei die Formteilungsebene (1.5) zumindest abschnittsweise entlang der Außenseite (2.2) und/oder der Innenseite (2.1) und/oder von Kanten des Windungsquerschnittprofils verläuft,
- Einbringen eines Gussmaterials in die Kavität (1.3) zum Erzeugen eines Gusskörpers mit der Form der aufgebogenen Wendel (2'),
- Öffnen der Dauerform (1) und Entnehmen des Gusskörpers,
- Entfernen von sich an der Außenseite (2.2) und/oder der Innenseite (2.3) und/oder den Kanten des Gusskörpers in der Formteilungsebene (1.5) erstreckenden Graten (3),
wobei die Flachseiten (2.1, 2.1') des Gusskörpers einander zugewandt sind, wenn der Gusskörper in die Form der Wendel (2) gebracht wird.

2. Verfahren gemäß Anspruch 1, wobei der Gusskörper nach dem Entnehmen in die Form der Wendel (2) gebogen wird.

3. Verfahren gemäß einem der vorhergehenden Ansprüche, wobei die Formteilungsebene (1.5) sich in Abschnitten, in denen sie entlang der Außenseite (2.2) und/oder der Innenseite (2.1) und/oder der Kanten des Windungsquerschnittprofils verläuft, einen Winkel (α) von mehr als 0° und weniger als 180° mit der Außenseite (2.2) und/oder der Innenseite (2.3) einschließt.

4. Verfahren gemäß einem der vorhergehenden Ansprüche, wobei zumindest in einem Teil der Bereiche, in denen die Formteilungsebene (1.5) entlang der Außenseite (2.2) und/oder der Innenseite (2.1) und/oder der Kanten des Windungsquerschnittprofils verläuft, die Kavität (1.3) zusätzliche Einbuchtungen aufweist, zum Herstellen von Opferstrukturen (2.4), die sich an der Außenseite (2.2) und/oder der Innenseite (2.1) und/oder den Kanten des wendelförmigen Gusskörpers in der Formteilungsebene (1.5) erstrecken, wobei die Opferstrukturen in einem Nachbearbeitungsschritt nach dem Entnehmen des Gusskörpers zusammen mit den Graten (3), die an ihnen verlaufen, entfernt werden.

5. Verfahren gemäß einem der vorhergehenden Ansprüche, wobei zum Entfernen der Grate (3) an der Innenseite und/oder zum Zusammenbiegen der aufgebogenen Wendel (2') zu der Wendel (2) ein Dorn (4) in die aufgebogene Wendel (2') eingesteckt wird.

6. Verfahren gemäß einem der vorhergehenden Ansprüche, wobei das Gussmaterial Aluminium und/oder Kupfer umfasst.

7. Verfahren gemäß einem der vorhergehenden Ansprüche, wobei eine Gießtemperatur über 1100°C liegt.

8. Verfahren gemäß einem der vorhergehenden Ansprüche, wobei ein Druckgussverfahren oder ein Kokillengussverfahren oder ein Niederdruckgussverfahren verwendet wird.

9. Verfahren gemäß einem der vorhergehenden Ansprüche, wobei die Formteilungsebene (1.5) innerhalb jeder Windung der von der Kavität (1.3) definierten Wendel (2) oder aufgebogenen Wendel (2) entlang der Flachseiten (2.1, 2.1') von der Innenseite (2.2) zu der Außenseite (2.3) verläuft, und wobei die Dauerform (1) zumindest in einem der Bereiche, in denen die Formteilungsebene entlang der Flachseiten (2.1, 2.1') verläuft, eine sich entlang der Formteilungsebene (1.5) in erstreckende in die Kavität (1.3) ragende Ausbauchung (1.4) aufweist, so dass der wendelförmige Gusskörper an den Flachseiten (2.1, 2.1') entsprechende Einbuchtungen (2.5) erhält.

10. Verfahren gemäß Anspruch 9, wobei die Dauerform (1) in jedem der Bereiche, in denen die Formteilungsebene entlang einer ersten (2.1) der Flachseiten (2.1, 2.1') verläuft, sich entlang der Formteilungsebene (1.5) erstreckende Ausbauchungen (1.4) aufweist, so dass der wendelförmige Gusskörper an der ersten Flachseite (2.1) entsprechende in der Formteilungsebene (1.5) verlaufende Einbuchtungen (2.5) erhält.

11. Verfahren gemäß Anspruch 10, wobei die Dauerform (1) in jedem der Bereiche, in denen die Formteilungsebene entlang einer zweiten (2.1') der Flachseiten (2.1, 2.1') verläuft,
- entweder ebenfalls die sich entlang der Formteilungsebenen erstreckende Ausbauchungen (1.4) aufweist, so dass der wendelförmige Gusskörper an beiden Flachseiten (2.1, 2.1') in der Formteilungsebene (1.5) die Einbuchtungen (2.5) erhält,
- oder sich entlang der Formteilungsebene erstreckende Aussparungen aufweist, so dass der wendelförmige Gusskörper an der ersten Flachseite (2.1) in der Formteilungsebene (1.5) die Einbuchtungen (2.5) und an der zweiten Flachseite (2.1') in der Formteilungsebene (1.5) Ausbauchungen (2.6) erhält, wobei die Ausbauchungen (2.6) innerhalb der Einbuchtungen (2.5) liegen, wenn der Gusskörper in der Form der Wendel (2) vorliegt.

12. Dauerform zum Gießen einer Wendel (2), genau zwei in einer Formteilungsebene (1.5) zusammenfügbare Formhälften (1.1, 1.2) umfassend, wobei die genau zwei Formhälften (1.1, 1.2) der Dauerform (1) in zusammengefügten Zustand eine Kavität (1.3) aufweisen, welche für den Gusskörper eine Form einer aufgebogenen Wendel (2') mit abgeflachtem Windungsquerschnittprofil vorgibt, wobei das Windungsquerschnittprofil zwei gegenüberliegende Flachseiten (2.1, 2.1'), eine Außenseite (2.2) und eine der Außenseite (2.2) gegenüberliegende Innenseite (2.3) aufweist, und die Flachseiten (2.1, 2.1') einander zugewandt sind, wenn der Gusskörper in Form der Wendel (2) gebracht wird, wobei die Formteilungsebene (1.5) zumindest abschnittsweise entlang der Außenseite (2.2) und/oder der Innenseite (2.1) und/oder von Kanten des Windungsquerschnittprofils verläuft.

13. Dauerform gemäß Anspruch 12, wobei die Formteilungsebene (1.5) innerhalb jeder Windung der von der Kavität (1.3) definierten Wendel (2) oder aufgebogenen Wendel (2) entlang der Flachseiten (2.1, 2.1') von der Innenseite (2.2) zu der Außenseite (2.3) verläuft, und wobei die Dauerform (1) zumindest in einem der Bereiche, in denen die Formteilungsebene entlang der Flachseiten (2.1, 2.1') verläuft, eine sich entlang der Formteilungsebenen erstreckende Ausbauchung (1.4), die in die Kavität (1.3) ragt, aufweist.

14. Gegossene Wendel (2), hergestellt nach einem Verfahren gemäß einem der Ansprüche 1 bis 11 oder mittels einer Dauerform gemäß einem der Ansprüche 12 oder 13, wobei die Wendel (2) ein abgeflachtes Windungsquerschnittprofil aufweist und wobei das Windungsquerschnittprofil zwei gegenüberliegende Flachseiten (2.1, 2.1'), eine Außenseite (2.2) und eine der Außenseite (2.2) gegenüberliegende Innenseite (2.3) aufweist, und die Flachseiten (2.1, 2.1') einander zugewandt sind, wobei zumindest an einer ersten (2.1) der beiden Flachseiten (2.1, 2.1') von der Außenseite (2.2) zur Innenseite (2.3) verlaufende Einbuchtungen (2.5) vorhanden sind.

15. Gegossene Wendel (2) gemäß Anspruch 14, wobei
- entweder an einer zweiten (2.1') der beiden Flachseiten (2.1, 2.1') ebenfalls von der Außenseite (2.2) zur Innenseite (2.3) verlaufende Einbuchtungen (2.5) vorhanden sind,
- oder an der zweiten Flachseite (2.1') von der Außenseite (2.2) zur Innenseite (2.3) verlaufende Ausbauchungen (2.6) vorhanden sind, die in die Einbuchtungen (2.5) ragen.

## Claims

1. A method for producing a helix (2), at least comprising the following steps:
- providing a permanent mold (1) which has exactly two mold halves (1.1, 1.2) that may be joined together in a mold parting plane (1.5);
- joining together the exactly two mold halves (1.1, 1.2) of the permanent mold (1) so that the permanent mold (1), when joined, has a cavity (1.3) that defines a form of a bent-up helix (2'), wherein the defined bent-up helix (2') defines a flattened winding cross-section profile with two opposite flat sides (2.1, 2.1'), an outer side (2.2) and an inner side (2.3) opposite the outer side (2.2), and wherein the mold parting plane (1.5) runs here at least in sections along the outer side (2.2) and/or along the inner side (2.1) and/or along edges of the winding cross-section profile,
- introducing a casting material into the cavity (1.3) to produce a casting having the form of the bent-up helix (2'),
- opening the permanent mold (1) and removing the casting,
- removing burrs (3) running along the outer side (2.2) and/or inner side (2.3) and/or edges of the casting in the mold parting line (1.5),
wherein the flat sides (2.1, 2.1') of the casting face each other when the casting is brought into the form of the helix (2).

2. The method according to claim 1, wherein the casting is bent into the form of the helix (2) after removal.

3. The method according to one of the preceding claims, wherein the mold parting line (1.5), in sections in which it runs along the outer side (2.2) and/or the inner side (2.1) and/or the edges of the winding cross-section profile, encloses an angle (α) of more than 0° and less than 180° with the outer side (2.2) and/or the inner side (2.3).

4. The method according to one of the preceding claims, wherein the cavity (1.3), in at least part of the areas where the mold parting line (1.5) runs along the outer side (2.2) and/or the inner side (2.1) and/or the edges of the winding cross-section profile, may have additional indentations to produce sacrificial structures (2.4) which extend along the outer side (2.2) and/or the inner side (2.1) and/or the edges of the helical casting in the mold parting line (1.5), wherein the sacrificial structures are removed in a reworking step after the casting has been removed, together with the burrs (3) that run along them.

5. The method according to one of the preceding claims, wherein a mandrel (4) is inserted into the bent-up helix (2') in order to remove the burrs (3) on the inner side and/or in order to bend together the bent-up helix (2') to form the helix (2).

6. The method according to one of the preceding claims, wherein the casting material comprises aluminum and/or copper.

7. The method according to one of the preceding claims, wherein the casting temperature is above 1100°C.

8. The method according to one of the preceding claims, wherein a die casting method or a permanent mold casting method or a low-pressure die casting method is used.

9. The method according to one of the preceding claims, wherein the mold parting line (1.5) runs within each winding of the helix (2) or bent-up helix (2') defined by the cavity (1.3) along the flat sides (2.1, 2.1') from the inner side (2.2) to the outer side (2.3), and wherein the permanent mold (1), at least in one of the areas where the mold parting line runs along the flat sides (2.1, 2.1'), has a protrusion (1.4) extending along the mold parting line (1.5) that projects into the cavity (1.3) so that the helical casting contains corresponding indentations (2.5) on the flat sides (2.1, 2.1').

10. The method according to claim 9, wherein the permanent mold (1), in each of the areas where the mold parting line runs along a first (2.1) of the flat sides (2.1, 2.1'), has protrusions (1.4) extending along the mold parting line (1.5), such that the helical casting is provided on the first flat side (2.1) with corresponding indentations (2.5) running in the mold parting line (1.5).

11. The method according to claim 10, wherein the permanent mold (1), in each of the areas where the mold parting line runs along a second (2.1') of the flat sides (2.1, 2.1'),
- either also has the protrusions (1.4) extending along the mold parting planes, such that the helical casting is provided with the indentations (2.5) on both flat sides (2.1, 2.1') in the mold parting plane (1.5),
- or has recesses extending along the mold parting line, such that the helical casting is provided on the first flat side (2.1) in the mold parting line (1.5) with the indentations (2.5) and on the second flat side (2.1') in the mold parting line (1.5) with protrusions (2.6), wherein the protrusions (2.6) lie within the indentations (2.5) when the casting is in the form of the helix (2).

12. A permanent mold for casting a helix (2), comprising exactly two mold halves (1.1, 1.2) that may be joined together in a mold parting plane (1.5), wherein the exactly two mold halves (1.1, 1.2) of the permanent mold (1), when joined, have a cavity (1.3) that defines, for the casting, a form of a bent-up helix (2') with flattened winding cross-section profile, wherein the winding cross-section profile has two opposite flat sides (2.1, 2.1'), an outer side (2.2) and an inner side (2.3) opposite the outer side (2.2), and the flat sides (2.1, 2.1') face one another when the casting is brought into the form of the helix (2), wherein the mold parting plane (1.5) runs at least in sections along the outer side (2.2) and/or the inner side (2.1) and/or edges of the winding cross-section profile.

13. The permanent mold according to claim 12, wherein the mold parting line (1.5), within each winding of the helix (2) or bent-up helix (2) defined by the cavity (1.3), runs along the flat sides (2.1, 2.1') from the inner side (2.2) to the outer side (2.3), and wherein the permanent mold (1), at least in one of the areas where the mold parting line runs along the flat sides (2.1, 2.1'), has a protrusion (1.4) extending along the mold parting lines and projecting into the cavity (1.3).

14. A cast helix (2), produced by a method according to one of claims 1 to 11 or by means of a permanent mold according to one of claims 12 or 13, wherein the helix (2) has a flattened winding cross-section profile, and wherein the winding cross-section profile has two opposite flat sides (2.1, 2.1'), an outer side (2.2), and an inner side (2.3) opposite the outer side (2.2), and the flat sides (2.1, 2.1') face one another,wherein indentations (2.5) running from the outer side (2.2) to the inner side (2.3) are provided at least on a first (2.1) of the two flat sides (2.1, 2.1').

15. The cast helix (2) according to claim 14, wherein
- either indentations (2.5) running likewise from the outer side (2.2) to the inner side (2.3) are provided on a second (2.1') of the two flat sides (2.1, 2.1'),
- or protrusions (2.6) running from the outer side (2.2) to the inner side (2.3) are provided on the second flat side (2.1') and project into the indentations (2.5).

## Revendications

1. Procédé de fabrication d'une spirale (2), comprenant au moins les étapes ci-dessous consistant à :
- fournir un moule permanent (1) comprenant exactement deux demi-moules (1.1, 1.2) pouvant être assemblés dans un plan de joint de moule (1.5) ;
- assembler les exactement deux demi-moules (1.1, 1.2) du moule permanent (1) de sorte que le moule permanent (1) à l'état assemblé présente une cavité (1.3) qui prédéfinit une forme de spirale recourbée (2'), dans lequel la spirale recourbée (2') prédéfinie prédéfinit un profil aplati de section transversale d'enroulement qui présente deux faces plates (2.1, 2.1') opposées, une face extérieure (2.2) et une face intérieure (2.3) opposée à la face extérieure (2.2), et dans lequel le plan de joint de moule (1.5) s'étend au moins par sections le long de la face extérieure (2.2) et/ou de la face intérieure (2.1) et/ou des bords du profil de section transversale d'enroulement,
- introduire un matériau de coulée dans la cavité (1.3) afin de produire un corps coulé présentant la forme de la spirale recourbée (2'),
- ouvrir le moule permanent (1) et retirer le corps coulé,
- éliminer les bavures (3) s'étendant dans le plan de joint de moule (1.5) au niveau de la face extérieure (2.2) et/ou au niveau de la face intérieure (2.3) et/ou sur les bords du corps coulé,
dans lequel les faces plates (2.1, 2.1') du corps coulé se font face lorsque le corps coulé est mis en forme de la spirale (2).

2. Procédé selon la revendication 1, dans lequel le corps coulé est fléchi en forme de spirale (2) après le retrait.

3. Procédé selon l'une quelconque des revendications précédentes, dans lequel le plan de joint de moule (1.5), dans les sections où il s'étend le long de la face extérieure (2.2) et/ou de la face intérieure (2.1) et/ou des bords du profil de section transversale d'enroulement, forme avec la face extérieure (2.2) et/ou la face intérieure (2.3) un angle (a) qui est compris entre 0° et 180°,

4. Procédé selon l'une quelconque des revendications précédentes, dans lequel, au moins dans une partie des régions dans lesquelles le plan de joint de moule (1.5) s'étend le long de la face extérieure (2.2) et/ou de la face intérieure (2.1) et/ou des bords du profil de section transversale d'enroulement, la cavité (1.3) présente des renfoncements supplémentaires afin de créer des structures sacrificielles (2.4) qui s'étendent dans le plan de joint de moule (1.5) au niveau de la face extérieure (2.2) et/ou de la face intérieure (2.1) et/ou des bords du corps coulé en forme de spirale, dans lequel les structures sacrificielles sont retirées dans une étape de post-traitement après le retrait du corps coulé avec les bavures (3) qui le longent.

5. Procédé selon l'une quelconque des revendications précédentes, dans lequel un mandrin (4) est inséré dans la spirale recourbée (2') afin d'éliminer les bavures (3) au niveau de la face intérieure et/ou afin de fléchir la spirale recourbée (2') pour obtenir la spirale (2).

6. Procédé selon l'une quelconque des revendications précédentes, dans lequel le matériau de coulée comprend de l'aluminium et/ou du cuivre.

7. Procédé selon l'une quelconque des revendications précédentes, dans lequel la température de coulée est supérieure à 1 100°C.

8. Procédé selon l'une quelconque des revendications précédentes, dans lequel un procédé de coulée sous pression ou un procédé de coulée en coquille ou un procédé de moulage basse pression est utilisé.

9. Procédé selon l'une quelconque des revendications précédentes, dans lequel le plan de joint de moule (1.5) s'étend, le long des faces plates (2.1, 2.1') à partir de la face intérieure (2.2) vers la face extérieure (2.3), à l'intérieur de chaque enroulement de la spirale (2), ou de la spirale recourbée (2), définie par la cavité (1.3), et le moule permanent (1) présente, au moins dans une des régions dans lesquelles le plan de joint de moule s'étend le long des faces plates (2.1, 2.1'), un renflement (1.4) faisant saillie dans la cavité (1.3) et s'étendant le long du plan de joint de moule (1.5), de sorte que le corps coulé en forme de spirale reçoit des renfoncements (2.5) correspondants au niveau des faces plates (2.1, 2.1').

10. Procédé selon la revendication 9, dans lequel le moule permanent (1), dans chacune des régions dans lesquelles le plan de joint de moule s'étend le long d'une première face plate (2.1) parmi les faces plates (2.1, 2.1'), présente des renflements (1.4) s'étendant le long du plan de joint de moule (1.5) de sorte que le corps coulé en forme de spirale reçoit, au niveau de la première face plate (2.1), des renfoncements (2.5) correspondants s'étendant dans le plan de joint de moule (1.5).

11. Procédé selon la revendication 10, dans lequel le moule permanent (1), dans chacune des régions dans lesquelles le plan de joint de moule s'étend le long d'une seconde face plate (2.1') parmi les faces plates (2.1, 2.1'),
- soit présente également les renflements (1.4) s'étendant le long des plans de joint de moule, de sorte que le corps coulé en forme de spirale reçoit les renfoncements (2.5) dans le plan de joint de moule (1.5) au niveau des deux faces plates (2.1, 2.1'),
- soit présente des évidements s'étendant le long du plan de joint de moule, de sorte que le corps coulé en forme de spirale reçoit les renfoncements (2.5) dans le plan de joint de moule (1.5) au niveau de la première face plate (2.1) et les renflements (2.6) dans le plan de joint de moule (1.5) au niveau de la seconde face plate (2.1'), dans lequel les renflements (2.6) se trouvent à l'intérieur des renfoncements (2.5) lorsque le corps coulé est en forme de spirale (2).

12. Moule permanent permettant de couler une spirale (2), comprenant exactement deux demi-moules (1.1, 1.2) pouvant être assemblés dans un plan de joint de moule (1.5), dans lequel les exactement deux demi-moules (1.1, 1.2) du moule permanent (1) à l'état assemblé présentent une cavité (1.3) qui prédéfinit pour le corps coulé une forme de spirale recourbée (2') avec un profil de section transversale d'enroulement aplati, dans lequel le profil de section transversale d'enroulement présente deux faces plates (2.1, 2.1') opposées, une face extérieure (2.2) et une face intérieure (2.3) opposée à la face extérieure (2.2), et les faces plates (2.1, 2.1')se font face lorsque le corps coulé prend la forme de la spirale (2), dans lequel le plan de joint de moule (1.5) s'étend au moins par sections le long de la face extérieure (2.2) et/ou de la face intérieure (2.1) et/ou à partir des bords du profil de section transversale d'enroulement.

13. Moule permanent selon la revendication 12, dans lequel le plan de joint de moule (1.5) s'étend le long des faces plates (2.1, 2.1') à partir de la face intérieure (2.2) vers la face extérieure (2.3), à l'intérieur de chaque enroulement de la spirale (2), ou de la spirale recourbée (2), définie par la cavité (1.3), et dans lequel le moule permanent (1) présente, au moins dans une des régions dans lesquelles le plan de joint de moule s'étend le long des faces plates (2.1, 2.1), un renflement (1.4) faisant saillie dans la cavité (1.3) et s'étendant le long du plan de joint de moule (1.5).

14. Spirale coulée (2) fabriquée selon un procédé selon l'une quelconque des revendications 1 à 11 ou au moyen d'un moule permanent selon la revendication 12 ou 12, dans laquelle la spirale (2) présente un profil de section transversale d'enroulement aplati et dans laquelle le profil de section transversale d'enroulement présente deux faces plates (2.1, 2.1') opposées, une face extérieure (2.2) et une face intérieure (2.3) opposée à la face extérieure (2.2), et les faces plates (2.1, 2.1') se font face, dans laquelle des renfoncements (2.5) s'étendant depuis la face extérieure (2.2) vers la face intérieure (2.3) sont présents au moins au moins au niveau d'une première face (2.1) parmi les deux faces plates (2.1, 2.1').

15. Spirale coulée (2) selon la revendication 14, dans laquelle
- soit des renfoncements (2.5) s'étendant également depuis la face extérieure (2.2) vers la face intérieure (2.3) sont présents au niveau d'une seconde face (2.1') parmi les deux faces plates (2.1, 2.1'),
- soit des renflements (2.6), s'étendant depuis la face extérieure (2.2) vers la face intérieure (2.3) et faisant saillie dans les renfoncements (2.5), sont présents au niveau de la seconde face plate (2.1').
